(19) Europäisches Patentamt
European Patent Office
Office européen des brevets

(11) EP 4 189 023 B1

(12) EUROPEAN PATENT SPECIFICATION

(45) Date of publication and mention of the grant of the patent:
**31.12.2025 Bulletin 2026/01**

(21) Application number: **20947277.8**

(22) Date of filing: **31.07.2020**

(51) International Patent Classification (IPC):
***C09D 133/04*** *(2006.01)* ***C09D 5/00*** *(2006.01)*

(52) Cooperative Patent Classification (CPC):
(C-Sets available)
**C09D 5/024; C09D 7/61; C09D 7/65; C09D 7/67; C09D 7/69; C09D 7/70; C09D 133/12;**
C08K 2201/005; C08K 2201/011 (Cont.)

(86) International application number:
**PCT/CN2020/106102**

(87) International publication number:
**WO 2022/021283 (03.02.2022 Gazette 2022/05)**

# (54) AQUEOUS DISPERSION OF POLYMER PARTICLES, MICROSPHERES, AND COLLOIDAL SILICA PARTICLES

WÄSSRIGE DISPERSION VON POLYMERTEILCHEN, MIKROKUGELN UND KOLLOIDALE SILICIUMDIOXIDTEILCHEN

DISPERSION AQUEUSE DE PARTICULES DE POLYMÈRES, MICROSPHÈRES ET PARTICULES DE SILICE COLLOÏDALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.06.2023 Bulletin 2023/23**

(73) Proprietors:
- **Dow Global Technologies LLC**
  **Midland, MI 48674 (US)**
- **Rohm and Haas Company**
  **Collegeville, PA 19426 (US)**

(72) Inventors:
- **WANG, Caifeng**
  **Shanghai 201203 (CN)**
- **XU, Jianming**
  **Shanghai 201203 (CN)**
- **POH, Eric**
  **Singapore 238855 (SG)**
- **HU, Yuehan**
  **Shanghai 201203 (CN)**
- **WANG, Tao**
  **Altona, VIC 3018 (AU)**
- **CALLEJAS, Juan**
  **Collegeville, Pennsylvania 19426 (US)**
- **HARSH, Philip**
  **Collegeville, Pennsylvania 19426 (US)**
- **BOHLING, James**
  **Collegeville, Pennsylvania 19426 (US)**
- **SWARTZ, Andrew**
  **Collegeville, Pennsylvania 19426 (US)**
- **MAJUMDAR, Partha**
  **Collegeville, Pennsylvania 19426 (US)**
- **TANZER, Joseph**
  **Collegeville, Pennsylvania 19426 (US)**

(74) Representative: **Beck Greener LLP**
**Fulwood House**
**12 Fulwood Place**
**London WC1V 6HR (GB)**

(56) References cited:

| | |
|---|---|
| **EP-A1- 0 462 365** | **WO-A1-2016/030842** |
| **WO-A1-2017/102359** | **WO-A1-2018/115239** |
| **WO-A1-2022/021283** | **WO-A1-2023/019073** |
| **WO-A2-2011/084464** | **CN-A- 102 825 885** |
| **CN-A- 105 505 166** | **CN-A- 108 300 062** |
| **JP-A- 2018 053 206** | **US-A- 5 258 424** |
| **US-A- 5 258 424** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 133/12, C08L 43/02, C08K 3/36**

## Description

### Background of the Invention

The present invention relates to a composition which is an aqueous dispersion of polymer particles, polymeric organic crosslinked microspheres, and colloidal silica particles. The composition is useful as an exterior coating composition.

US 5 258 424 A discloses an aqueous coating composition capable of forming a coating with improved moisture permeability. Exterior coatings require excellent durability, color retention, and dirt pickup resistance (DPUR). The addition of an aqueous dispersion of $SiO_2$ nanoparticles (colloidal silica) to paint formulations has been shown to provide significant improvement in DPUR, but at the expense of chalking and color fading. Accordingly, it would be an advantage in the art of exterior coating formulations to achieve excellent durability and color retention in addition to DPUR.

### Summary of the Invention

The present invention addresses a need in the art by providing a composition comprising an aqueous dispersion of a) 10 to 60 weight percent, based on the weight of the composition, polymer particles having a z-average particle size in the range of from 70 nm to 550 nm and a calculated $T_g$ in the range of from -10 °C to 50 °C; b) 10 to 40 weight percent, based on the dry weight percent of the composition, polymeric organic crosslinked microspheres having a median weight average ($D_{50}$) particle size in the range of from 0.7 μm to 30 μm; and c) colloidal silica particles having a z-average particle size in the range of from 5 nm to 150 nm; wherein the weight-to-weight ratio of the colloidal silica particles to the polymer particles is in the range of from 5:95 to 35:65. The composition of the present invention is useful in the preparation of architectural coatings formulations with high dirt pick-up resistance and excellent durability.

### Detailed Description of the Invention

The present invention is a composition comprising an aqueous dispersion of a) 10 to 60 weight percent, based on the weight of the composition, polymer particles having a z-average particle size in the range of from 70 nm to 550 nm and a calculated $T_g$ by the Fox equation in the range of from - 10 °C to 50 °C; b) 10 to 40 weight percent, based on the dry weight percent of the composition, polymeric organic crosslinked microspheres having a median weight average ($D_{50}$) particle size in the range of from 0.7 μm to 30 μm; and c) colloidal silica particles having a z-average particle size in the range of from 5 nm to 150 nm; wherein the weight-to-weight ratio of the colloidal silica particles to the polymer particles is in the range of from 5:95 to 35:65.

The polymer particles may be acrylic, styrene acrylic, or vinyl ester polymer particles. Preferably the polymer particles are acrylic polymers having a z-average particle size in the range of from about 70 nm to 300 nm, as measured by dynamic light scattering. The acrylic polymer particles comprise at least 40, preferably at least 60, more preferably at least 80, and most preferably at least 90 weight percent structural units of one or more methacrylate monomers such as methyl methacrylate and ethyl methacrylate, and/or one or more acrylate monomers such as ethyl acrylate, butyl acrylate, 2-propylheptyl acrylate, and 2-ethylhexyl acrylate.

As used herein, the term "structural unit" of the named monomer refers to the remnant of the monomer after polymerization. For example, a structural unit of methyl methacrylate is as illustrated:

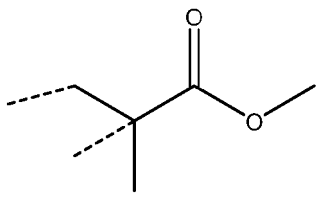

structural unit of methyl methacrylate

where the dotted lines represent the points of attachment of the structural unit to the polymer backbone.

The polymer particles, preferably the acrylic polymer particles, may also comprise from 0.1 to 10 weight percent structural units of ethylenically unsaturated carboxylic acid monomers such as methacrylic acid, acrylic acid, and itaconic acid, or salts thereof; or phosphorus acid monomers such as 2-phosphoethyl methacrylate (PEM).

The polymer particles, preferably the acrylic polymer particles, may also include structural units of ancillary monomers such as acrylamide and acrylonitrile, as well as structural units of multiethylenically unsaturated monomers

such as allyl methacrylate, allyl acrylate, divinyl benzene, trimethylolpropane trimethacrylate, trimethylolpropane triacrylate, butylene glycol (1,3) dimethacrylate, butylene glycol (1,3) diacrylate, ethylene glycol dimethacrylate, and ethylene glycol diacrylate.

The polymeric organic crosslinked microspheres have a median weight average particle size ($D_{50}$) in the range of from 0.7 μm, preferably from 1 μm, more preferably from 2 μm, and most preferably from 4 μm, to 30 μm, to preferably 20 μm, more preferably to 13 μm, and most preferably to 10 μm, as measured using a Disc Centrifuge Photosedimentometer (DCP). These organic polymeric microspheres are characterized by being non-film-forming and preferably having a low $T_g$ crosslinked core, that is, a crosslinked core having a $T_g$, as calculated by the Fox equation, of not greater than 25 °C, more preferably not greater than 15 °C, and more preferably not greater than 10 °C.

The crosslinked core of the polymeric organic crosslinked microspheres preferably comprises structural units of one or more monoethylenically unsaturated monomers whose homopolymers have a $T_g$ of not greater than 20 °C (low $T_g$ monomers) such as methyl acrylate, ethyl acrylate, n-butyl acrylate, and 2-ethylhexyl acrylate. Preferably, the crosslinked low $T_g$ core comprises, based on the weight of the core, from 50, more preferably from 70, more preferably from 80, and most preferably from 90 weight percent, to preferably 99, and more preferably to 97.5 weight percent structural units of a low $T_g$ monoethylenically unsaturated monomer. *n*-Butyl acrylate and 2-ethylhexyl acrylate are preferred low $T_g$ monoethylenically unsaturated monomers used to prepare the low $T_g$ core.

The crosslinked core further comprises structural units of a multiethylenically unsaturated monomer. The concentration of structural units of the multiethylenically unsaturated monomer in the crosslinked microspheres is preferably in the range of from 1, more preferably from 2 weight percent, to 9, more preferably to 8, and most preferably to 6 weight percent, based on the weight of the core.

The polymeric organic crosslinked microspheres are preferably multistage microspheres comprising a crosslinked core that is clad with high a $T_g$ shell, that is, a shell having a $T_g$ of at least 50 °C, more preferably at least 70 °C, and most preferably at least 90 °C. The shell preferably comprises structural units of monomers whose homopolymers have a $T_g$ greater than 70 °C (high $T_g$ monomers), such as methyl methacrylate, styrene, isobornyl methacrylate, cyclohexyl methacrylate, and t-butyl methacrylate. The high $T_g$ shell preferably comprises at least 90 weight percent structural units of methyl methacrylate.

The polymeric organic crosslinked microspheres, preferably multistage polymeric organic crosslinked microspheres, preferably further comprise, based on the weight of the microspheres, from 0.05 to 5 percent structural units of a polymerizable organic phosphate represented by the structure of Formula I:

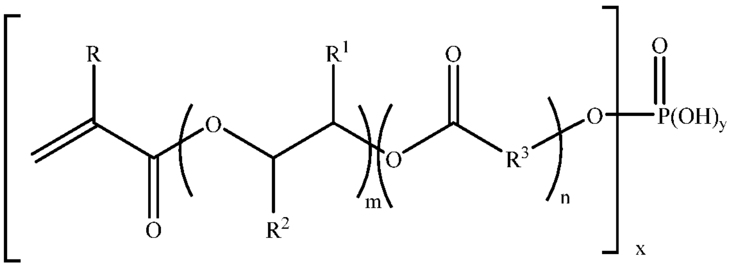

I

or a salt thereof; wherein R is H or $CH_3$, wherein $R^1$ and $R^2$ are each independently H or $CH_3$, with the proviso that $CR^2CR^1$ is not $C(CH_3)C(CH_3)$; each $R^3$ is independently linear or branched $C_2$-$C_6$ alkylene; m is from 1 to 10; n is from 0 to 5; with the proviso that when m is 1, then n is from 1 to 5; x is 1 or 2; and y is 1 or 2; and x + y = 3.

When n is 0, x is 1, and y is 2, the polymerizable organic phosphate or salt thereof is represented by the structure of Formula II:

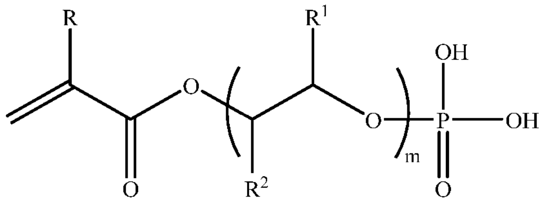

II

Preferably, each $R^1$ is H, and each $R^2$ is H or $CH_3$; m is preferably from 3, and more preferably from 4; to preferably to 8, and more preferably to 7. Sipomer PAM-100, Sipomer PAM-200 and Sipomer PAM-600 phosphate esters are examples of commercially available compounds within the scope of the compound of Formula II.

Where n is 1; m is 1; R is $CH_3$; $R^1$ and $R^2$ are each H; $R^3$ is $-(CH_2)_5-$; x is 1 or 2; y is 1 or 2; and x + y = 3, the polymerizable organic phosphate or salt thereof is represented by the structure of Formula III:

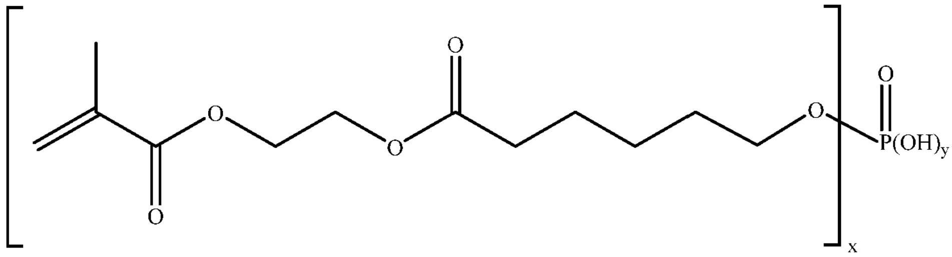

III

A commercially available compound within the scope of Formula III is Kayamer PM-21 phosphate ester.

The polymeric organic crosslinked microspheres may also comprise 0.05 to 5 weight percent, based on the weight of the microspheres, structural units of an ethylene oxide salt of a distyryl or a tristyryl phenol represented by the structure of Formula IV:

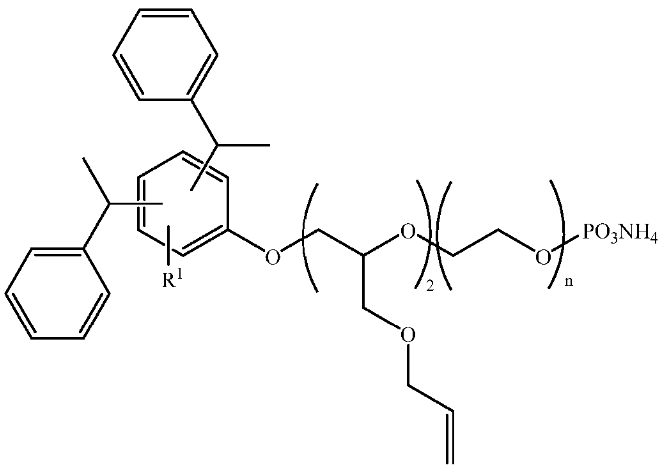

IV

where $R^1$ is H, $CH_2CR{=}CH_2$, $CH{=}CHCH_3$, or 1-phenethyl; R is $C_1$-$C_4$-alkyl; and n is 12 to 18. A commercial example of the structure of Formula IV is E-Sperse RS-1684 reactive surfactant.

The polymeric organic crosslinked microspheres are distinct from opaque polymers, which comprise water-containing cores that form voided polymer particles after application of the dispersion onto a substrate, followed by evaporation.

The composition of the present invention may comprise some level of inorganic extenders such as talc, clay, mica, sericite, $CaCO_3$, nepheline, feldspar, wollastonite, kaolinite, dicalcium phosphate, and diatomaceous earth; however, it is not considered advantageous to include inorganic extenders; accordingly, the weight-to-weight ratio of inorganic extender to polymeric organic multistage crosslinked microspheres is not greater than 1:5, more preferably not greater than 1:10, more preferably not greater than 1:20, and most preferably not greater than 1:100.

The colloidal silica particles preferably have a z-average particle size in the range of from 10 nm to 100 nm, more preferably to 50 nm, and most preferably to 30 nm. The w/w ratio of the colloidal silica particles to polymer particles is preferably in the range of from 10:90, more preferably from 15:85, to preferably 30:70, more preferably to 25:75.

The composition further preferably comprises additional materials such as rheology modifiers, coalescents, surfactants, dispersants, defoamers, biocides, opacifying pigments such as $TiO_2$ and organic opaque polymer particles, colorants, photoinitiators, and neutralizing agents.

The composition of the present invention is useful in coatings compositions for exterior applications. It has been discovered that coatings prepared from formulations containing the composition of the present invention exhibit excellent

dirt pick-up resistance and durability.

Examples

Intermediate Example 1 - Preparation of Aqueous Dispersion of Polymer and Colloidal Silica Particles

DIRTSHIELD™ 12M Acrylic Binder (199 g, methyl methacrylate/butyl acrylate/methacrylic acid, $T_g$ = 27 °C as calculated by the Fox equation, 49 wt. % solids, a Trademark of The Dow Chemical Company or its Affiliates), Levasil CS40-113 colloidal silica (density = 1.3 g/cm$^3$, specific surface area = 130 m$^2$/g, 40 wt. % solids), and AMP-95 neutralizing agent (0.91 g) were mixed together to form Intermediate 1.

Intermediate Example 2 - Preparation of Aqueous Dispersion of Polymer and Colloidal Silica Particles

DIRTSHIELD™ 12M Acrylic Binder (199 g, 49 wt. % solids), Bindzil CC-401 colloidal silica (density = 1.3 g/cm$^3$, average particle size = 12 nm, 37 wt. % solids), and AMP-95 neutralizing agent (0.91 g) were combined to form Intermediate 2.

Table 1 illustrates the materials used to prepare paint formulations and their amounts. HEC refers to Natrosol 250HBR Hydroxyethylcellulose; Dispersant refers to OROTAN™ 731A Dispersant; Surfactant refers to TRITON™ DR-16 Surfactant; Defoamer refers to Tego Foamex Defoamer; $TiO_2$ refers to Ti-Pure R-706 $TiO_2$; CC-700 refers to CC-700 Calcium Carbonate Inorganic Extender; Microspheres refers to the aqueous dispersion of polymeric organic crosslinked microspheres prepared as described in US 2018/327,562, Example 1 ($D_{50}$ particle size = 8.4 μm); Acrylic Binder refers to DIRTSHIELD™ 12M Acrylic Binder; Opaque Polymer refers to ROPAQUE Ultra E Opaque Polymer; RM-2020 NPR refers to ACRYSOL™ RM-2020 NPR; RM-8W refers to ACRYSOL™ RM-8W; and Biocide refers to Rocima Biocide.

Table 1 - Paint Formulations

| Examples | Comp. 1 | Comp. 2 | Comp. 3 | Ex. 1 | Ex. 2 |
|---|---|---|---|---|---|
| **Grind Stage** | | | | | |
| Water | 110.0 | 110.0 | 110.0 | 110.0 | 110.0 |
| HEC | 1.5 | 1.5 | 1.5 | 1.5 | 1.5 |
| AMP-95 | 0.5 | 0.50 | 0.5 | 0.50 | 0.50 |
| Propylene Glycol | 20.0 | 20.0 | 20.0 | 20.0 | 20.0 |
| Dispersant | 12.32 | 11.04 | 12.32 | 11.04 | 11.04 |
| Surfactant | 1.00 | 1.00 | 1.00 | 1.00 | 1.00 |
| Defoamer | 0.50 | 0.50 | 0.50 | 0.50 | 0.50 |
| $TiO_2$ | 160 | 160 | 160 | 160 | 160 |
| CC-700 | 148 | 148 | - | - | - |
| **Total Grind** | 453.8 | 452.5 | 305.8 | 304.5 | 304.5 |
| **Let-Down stage** | | | | | |
| Microspheres | 0.0 | 0.0 | 140.0 | 140.0 | 140.0 |
| Acrylic Binder | 367.0 | - | 367.0 | - | - |
| Intermediate 1 | - | 394.0 | - | 394.0 | - |
| Intermediate 2 | - | - | - | - | 394.0 |
| Texanol | 21.58 | 36.00 | 21.58 | 36.00 | 36.00 |
| Opaque Polymer | 20.36 | 20.00 | 20.36 | 20.00 | 20.00 |
| Defoamer | 0.50 | 0.50 | 0.50 | 0.50 | 0.50 |
| RM-2020 NPR | 2.00 | 2.00 | 2.00 | 2.00 | 2.00 |
| RM-8W | 2.40 | 1.80 | 2.40 | 1.40 | 1.40 |
| Biocide | 10.00 | 10.00 | 10.00 | 10.00 | 10.00 |
| Water | 122.00 | 83.00 | 130.00 | 92.00 | 92.00 |
| Total Grind + Let-Down | 1000 | 1000 | 1000 | 1000 | 1000 |

Accelerated Weather Test Method for Durability

Blue paints tinted with phthlaocyanine colorant (3.1% v/v) were prepared and 150-μm wet films were drawn down

onto aluminum panels using an applicator. The films were cured over 7 d, after which time initial $L_0$*, $a_0$*, $b_0$* values were measured using a BYK Gardner Color-guide sphere spectrophotometer before the samples were placed in a QUV test instrument (Q-Lab Corp., 340 nm light source UVA with 0.77 w/$m^2$ irradiance intensity) with the test area facing inward. Each QUV cycle consisted of an 8-h UV irradiation at 60 °C followed by a 4-h water spray at 50 °C. L*, a*, b* measurement and surface changes were recorded every cycle for each panel.

ΔE* was calculated by the following formula:

$$\Delta E^* = \sqrt{(L_1^* - L_0^*)^2 + (a_1^* - a_0^*)^2 + (b_1^* - b_0^*)^2}$$

Table 2 illustrates the durability ranking for the various coatings, with 10 being the most durable. A durability ranking of 9 or 10 was considered a passing rating.

Table 2 - Durability Ranking

| QUV A (h) | ΔE* | Rank |
|---|---|---|
| 1500 | ≤2.0 | 10 |
| 1500 | ≤3.0 | 9 |
| 1500 | ≤4.0 | 8 |
| 1000 | ≥2.0 | 7 |
| 1000 | ≥3.0 | 6 |
| 1000 | ≥8.0 | 5 |
| 1000 | ≥6.0 | 4 |
| 500 | ≥2.0 | 3 |
| 500 | ≥3.0 | 2 |
| 500 | ≥4.0 | 1 |

Table 3 illustrates the durability for each of the paints tested.

Table 3 - Durability Ranking for Tested Samples

| | Description | Durability |
|---|---|---|
| Comp.1 | DS-12M | 5 |
| Comp.2 | Hybrid binder A | 6 |
| Comp. 3 | DS-12M + durable matte beads | 10 |
| Example 1 | Hybrid A + durable matte beads | 9 |
| Example 2 | Hybrid B + durable matte beads | 10 |

The durability tests indicated that Comparative Example 3 paint and Example paints 1 and 2 all passed, while Comparative Example paints 1 and 2 failed.

Outdoor Exposure Test

A primer was applied onto cement panels then allowed to cure for 2 h. Each paint was initially applied to the primed cement panels and allowed to cure for 2 h. Then the paints were applied again and allowed to cure overnight. Initial Y and L*, a*, b* values were recorded, after which time the panels were exposed outside with a southerly exposure and set at an angle of 45°. Y and L*, a*, b* values and changes in appearance were recorded every month. The dirt pickup resistance ($D_c$) value trend was recorded; $D_c$ = L*/L*$_0$. The higher the $D_c$ the better the dirt pickup resistance. Table 4 illustrates the $D_c$ trends at 1, 2, and 6 months. A $D_c$ at 6 months of > 95% was considered acceptable.

Table 4 - $D_c$ Trends for Tested Samples

| Examples | 1 m | 2 m | 6 m |
|---|---|---|---|
| Comp. 1 | 97.8% | 97.0% | 94.8% |
| Comp. 2 | 99.0% | 99.0% | 97.3% |
| Comp. 3 | 97.3% | 96.7% | 94.5% |
| Example 1 | 99.0% | 99.0% | 97.0% |
| Example 2 | 99.3% | 99.2% | 97.4% |

Table 4 shows that Comparative Example 2 and Examples 1 and 2 showed acceptable dirt pickup resistance, while Comparative Examples 1 and 3 failed. The results show that only formulations that contained both polymeric organic crosslinked microspheres and colloidal silica particles exhibited acceptable durability and dirt pickup resistance.

## Claims

1. A composition comprising an aqueous dispersion of a) 10 to 60 weight percent, based on the weight of the composition, polymer particles having a z-average particle size in the range of from 70 nm to 550 nm and a calculated $T_g$ in the range of from -10 °C to 50 °C; b) 10 to 40 weight percent, based on the dry weight percent of the composition, polymeric organic crosslinked microspheres having a median weight average ($D_{50}$) particle size in the range of from 0.7 μm to 30 μm; and c) colloidal silica particles having a z-average particle size in the range of from 5 nm to 150 nm; wherein the weight-to-weight ratio of the colloidal silica particles to the polymer particles is in the range of from 5:95 to 35:65.

2. The composition of Claim 1 wherein the polymer particles are acrylic polymer particles having a z-average particle size in the range of from 70 nm to 300 nm; wherein the acrylic polymer particles comprise at least 60 weight percent structural units of one or more methacrylate and one or more acrylate monomers; wherein the colloidal silica particles have a z-average particle size in the range of from 10 nm to 50 nm.

3. The composition of Claim 2 wherein the weight-to-weight ratio of the colloidal silica particles to the polymer particles is in the range of from 10:90 to 30:70; wherein the $D_{50}$ particle size of the organic crosslinked microspheres is in the range of from 2 μm to 20 μm; and wherein the acrylic polymer particles comprise at least 80 weight percent structural units of a combination of methyl methacrylate and one or more acrylate monomers selected from the group consisting of ethyl acrylate, butyl acrylate, 2-propylheptyl acrylate, and 2-ethylhexyl acrylate.

4. The composition of Claim 3 which optionally comprises inorganic extender, wherein the weight-to-weight ratio of inorganic extender to polymeric organic multistage crosslinked microspheres is not greater than 1:5.

5. The composition of Claim 4 wherein the weight-to-weight ratio of inorganic extender to polymeric organic multistage crosslinked microspheres is not greater than 1:20.

6. The composition of Claim 1 wherein the polymeric organic crosslinked microspheres further comprise, based on the weight of the microspheres, either a) from 0.05 to 5 percent structural units of a polymerizable organic phosphate represented by the structure of Formula I:

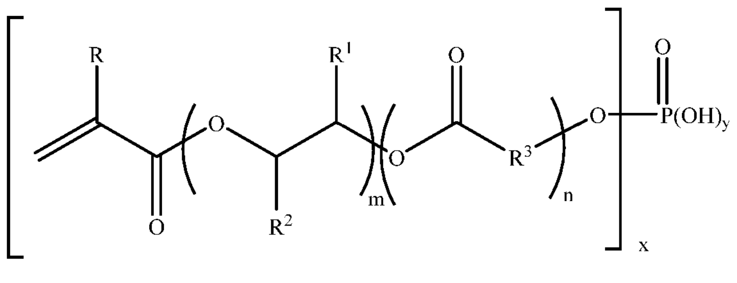

I

or a salt thereof; wherein R is H or $CH_3$, wherein $R^1$ and $R^2$ are each independently H or $CH_3$, with the proviso that $CR^2CR^1$ is not $C(CH_3)C(CH_3)$; each $R^3$ is independently linear or branched $C_2$-$C_6$ alkylene; m is from 1 to 10; n is from 0 to 5; with the proviso that when m is 1, then n is from 1 to 5; x is 1 or 2; and y is 1 or 2; and x + y = 3; or
b) from 0.05 to 5 weight percent, based on the weight of the microspheres, structural units of an ethylene oxide salt of a distyryl or a tristyryl phenol represented by the structure of Formula IV:

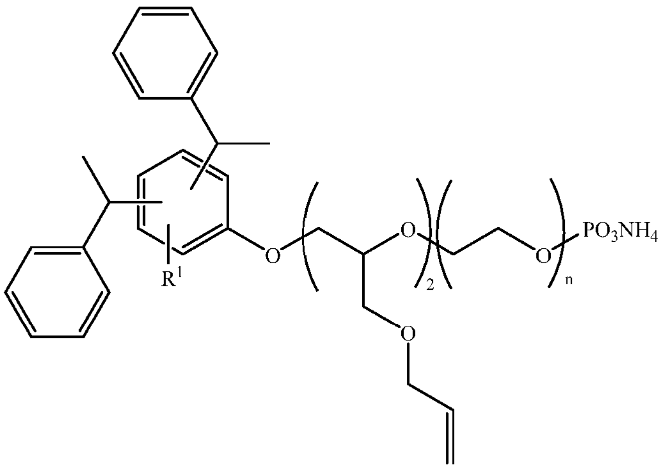

IV

where $R^1$ is H, $CH_2CR{=}CH_2$, $CH{=}CHCH_3$, or 1-phenethyl; R is $C_1$-$C_4$-alkyl; and n is 12 to 18.

7. The composition of Claim 1 which further comprises one or more materials selected from the group consisting of rheology modifiers, coalescents, surfactants, dispersants, defoamers, biocides, $TiO_2$ and organic opaque polymer particles, photoinitiators, and colorants.

## Patentansprüche

1. Zusammensetzung, umfassend eine wässrige Dispersion aus a) zu 10 bis 60 Gewichtsprozent, basierend auf dem Gewicht der Zusammensetzung, Polymerteilchen, die eine z-durchschnittliche Teilchengröße in dem Bereich von 70 nm bis 550 nm und eine berechnete $T_g$ in dem Bereich von -10 °C bis 50 °C aufweisen; b) zu 10 bis 40 Gewichtsprozent, basierend auf dem Trockengewichtsprozentsatz der Zusammensetzung, polymere organische vernetzte Mikrokügelchen, die eine mittlere gewichtsdurchschnittliche ($D_{50}$) Teilchengröße in dem Bereich von 0,7 μm bis 30 μm aufweisen; und c) kolloidalen Siliziumdioxidteilchen, die eine z-durchschnittliche Teilchengröße in dem Bereich von 5 nm bis 150 nm aufweisen; wobei das Gewicht-zu-Gewicht-Verhältnis der kolloidalen Siliziumdioxidteilchen zu den Polymerteilchen in dem Bereich von 5 : 95 bis 35 : 65 liegt.

2. Zusammensetzung nach Anspruch 1, wobei die Polymerteilchen Acrylpolymerteilchen sind, die eine z-durchschnittliche Teilchengröße in dem Bereich von 70 nm bis 300 nm aufweisen; wobei die Acrylpolymerteilchen zu mindestens 60 Gewichtsprozent Struktureinheiten eines oder mehrerer Methacrylat- und eines oder mehrerer Acrylatmonomere umfassen; wobei die kolloidalen Siliziumdioxidteilchen eine z-durchschnittliche Teilchengröße in dem Bereich von 10 nm bis 50 nm aufweisen.

3. Verfahren nach Anspruch 2, wobei das Gewicht-zu-Gewicht-Verhältnis der kolloidalen Siliziumdioxidteilchen zu den Polymerteilchen in dem Bereich von 10 : 90 bis 30 : 70 liegt; wobei die $D_{50}$ Teilchengröße der organischen vernetzten Mikrokügelchen in dem Bereich von 2 μm bis 20 μm liegt; und wobei die Acrylpolymerteilchen zu mindestens 80 Gewichtsprozent Struktureinheiten einer Kombination aus Methylmethacrylat und einem oder mehreren Acrylatmonomeren umfassen, die aus der Gruppe ausgewählt sind, bestehend aus Ethylacrylat, Butylacrylat, 2-Propylheptylacrylat und 2-Ethylhexylacrylat.

4. Zusammensetzung nach Anspruch 3, die optional ein anorganisches Streckmittel umfasst, wobei das Gewicht-zu-Gewicht-Verhältnis von anorganischem Streckmittel zu polymeren organischen mehrstufigen vernetzten Mikrokügelchen nicht größer als 1 : 5 ist.

5. Zusammensetzung nach Anspruch 4, wobei das Gewicht-zu-Gewicht-Verhältnis von anorganischem Streckmittel zu polymeren organischen mehrstufigen vernetzten Mikrokügelchen nicht größer als 1 : 20 ist.

6. Zusammensetzung nach Anspruch 1, wobei die polymeren organischen vernetzten Mikrokügelchen ferner umfassen, basierend auf dem Gewicht der Mikrokügelchen, entweder a) von zu 0,05 bis 5 Prozent Struktureinheiten eines polymerisierbaren organischen Phosphats, dargestellt durch die Struktur von Formel I:

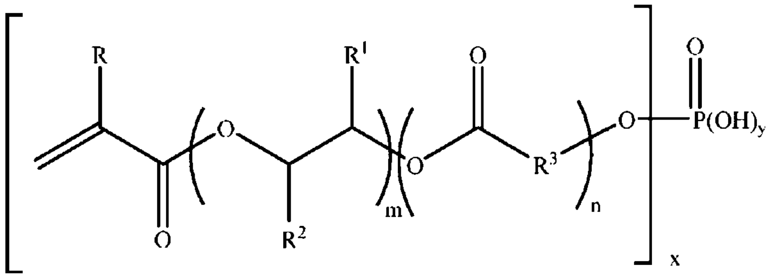

I

oder ein Salz davon; wobei R H oder $CH_3$ ist, wobei $R^1$ und $R^2$ jeweils unabhängig voneinander H oder $CH_3$ sind, mit der Maßgabe, dass $CR^2CR^1$ nicht $C(CH_3)C(CH_3)$ ist; wobei jedes $R^3$ unabhängig lineares oder verzweigtes $C_2$-$C_6$-Alkylen ist; m von 1 bis 10 ist; n von 0 bis 5 ist; mit der Maßgabe, dass, wenn m 1 ist, dann n von 1 bis 5 ist; x 1 oder 2 ist; und y 1 oder 2 ist; und x + y = 3; oder
b) von zu 0,05 bis 5 Gewichtsprozent, basierend auf dem Gewicht der Mikrokügelchen, Struktureinheiten eines Ethylenoxidsalzes eines Distyryl- oder Tristyrylphenols, dargestellt durch die Struktur von Formel IV:

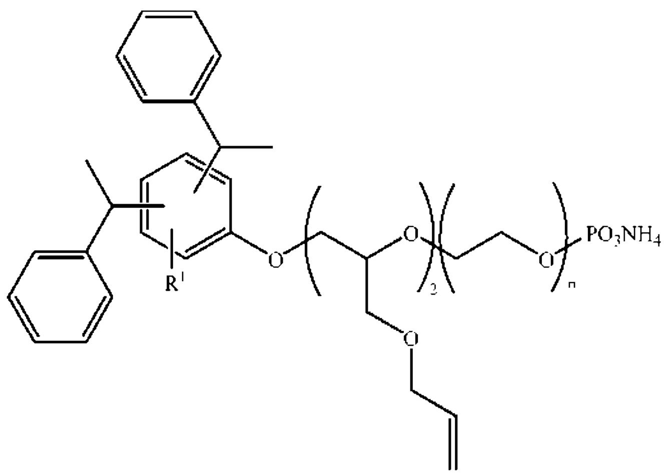

IV

wobei $R^1$ H, $CH_2CR{=}CH_2$, $CH{=}CHCH_3$ oder 1-Phenethyl ist; R $C_1$-$C_4$-Alkyl ist; und n 12 bis 18 ist.

7. Zusammensetzung nach Anspruch 1, die ferner ein oder mehrere Materialien umfasst, die aus der Gruppe ausgewählt sind, bestehend aus Rheologiemodifikatoren, Koaleszenzmitteln, Tensiden, Dispergiermitteln, Entschäumern, Bioziden, $TiO_2$ und organischen opaken Polymerteilchen, Fotoinitiatoren und Färbemitteln.

## Revendications

1. Composition comprenant une dispersion aqueuse de a) 10 à 60 pour cent en poids, sur la base du poids de la composition, de particules de polymère ayant une taille de particules moyenne en z comprise dans la plage allant de 70 nm à 550 nm et une $T_g$ calculée comprise dans la plage allant de -10 °C à 50 °C ; b) 10 à 40 pour cent en poids, sur la base du pourcentage en poids sec de la composition, de microsphères réticulées organiques polymères ayant une

taille médiane de particules moyenne en poids ($D_{50}$) comprise dans la plage allant de 0,7 μm à 30 μm ; et c) des particules de silice colloïdale ayant une taille de particules moyenne en z comprise dans la plage allant de 5 nm à 150 nm ; dans laquelle le rapport poids/poids entre les particules de silice colloïdale et les particules de polymère est compris dans la plage allant de 5:95 à 35:65.

**2.** Composition selon la revendication 1, dans laquelle les particules de polymères sont des particules de polymère acrylique ayant une taille de particules moyenne en z comprise dans la plage allant de 70 nm à 300 nm ; dans laquelle les particules de polymère acrylique comprennent au moins 60 pour cent en poids de motifs structurels d'un ou plusieurs monomères de méthacrylate et d'un ou plusieurs monomères d'acrylate ; dans laquelle les particules de silice colloïdale ont une taille de particules moyenne en z comprise dans la plage allant de 10 nm à 50 nm.

**3.** Composition selon la revendication 2, dans laquelle le rapport poids/poids entre les particules de silice colloïdale et les particules de polymère est compris dans la plage allant de 10:90 à 30:70 ; dans laquelle la taille de particules $D_{50}$ des microsphères réticulées organiques est comprise dans la plage allant de 2 μm à 20 μm ; et dans laquelle les particules de polymère acrylique comprennent au moins 80 pour cent en poids de motifs structurels d'une combinaison de méthacrylate de méthyle et d'un ou plusieurs monomères d'acrylate choisis dans le groupe constitué d'acrylate d'éthyle, acrylate de butyle, acrylate de 2-propylheptyle, et acrylate de 2-éthylhexyle.

**4.** Composition selon la revendication 3, qui comprend facultativement un diluant inorganique, dans laquelle le rapport poids/poids entre le diluant inorganique et les microsphères réticulées multiphasées organiques polymères n'est pas supérieur à 1:5.

**5.** Composition selon la revendication 4, dans laquelle le rapport poids/poids entre le diluant inorganique et les microsphères réticulées multiphasées organiques polymères n'est pas supérieur à 1:20.

**6.** Composition selon la revendication 1, dans laquelle les microsphères réticulées organiques polymères comprennent en outre, sur la base du poids des microsphères, soit a) de 0,05 à 5 pour cent de motifs structurels d'un phosphate organique polymérisable représenté par la structure de Formule I :

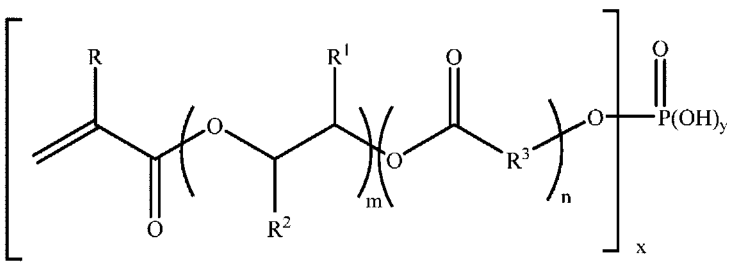

I

ou un sel de celui-ci ; dans laquelle R est H ou $CH_3$, dans laquelle $R^1$ et $R^2$ sont chacun indépendamment H ou $CH_3$, à condition que $CR^2CR^1$ ne soit pas $C(CH_3)C(CH_3)$ ; chaque $R^3$ est indépendamment un alkylène en $C_2$-$C_6$ linéaire ou ramifié ; m va de 1 à 10 ; n va de 0 à 5 ; à condition que, lorsque m vaut 1, alors n vaille de 1 à 5 ; x vaut 1 ou 2 ; et y vaut 1 ou 2 ; et x + y = 3 ; ou
b) de 0,05 à 5 pour cent en poids, sur la base du poids des microsphères, de motifs structurels d'un sel d'oxyde d'éthylène d'un distyryl- ou tristyryl-phénol représenté par la structure de Formule IV :

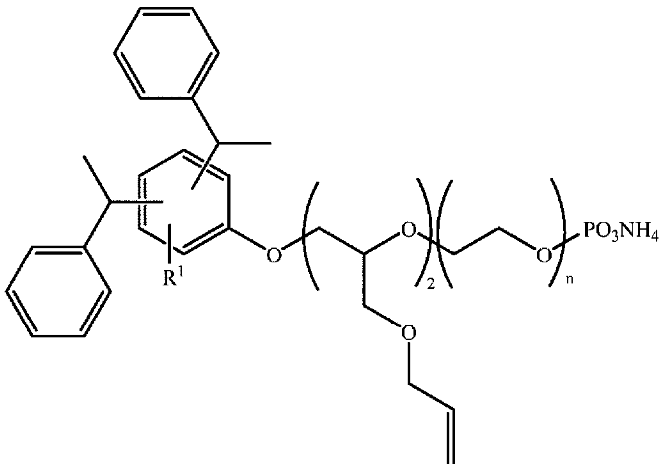

IV

où $R^1$ est H, $CH_2CR=CH_2$, $CH=CHCH_3$, ou 1-phénéthyle ; R est alkyle en $C_1$-$C_4$ ; et n vaut de 12 à 18.

7. Composition selon la revendication 1, qui comprend en outre une ou plusieurs matières choisies dans le groupe constitué de modificateurs de rhéologie, agents de coalescence, agents tensioactifs, dispersants, antimousses, biocides, particules de $TiO_2$ et de polymères organiques opaques, photo-initiateurs, et colorants.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5258424 A
- US 2018327562 A